Europäisches Patentamt

(19) European Patent Office (11) Numéro de publication: **0 164 791**
**B1**
Office européen des brevets

(12) FASCICULE DE BREVET EUROPEEN

(45) Date de publication du fascicule du brevet: (51) Int. Cl.⁴: **G 11 B 23/027**
07.01.88

(21) Numéro de dépôt: 85200794.7

(22) Date de dépôt: 20.05.85

(54) **Bague de cerclage et de stockage pour bobine de ruban d'enregistrement.**

(30) Priorité: 29.05.84 FR 8408423

(43) Date de publication de la demande:
18.12.85 Bulletin 85/51

(45) Mention de la délivrance du brevet:
07.01.88 Bulletin 88/1

(84) Etats contractants désignés:
AT BE CH DE GB IT LI NL SE

(56) Documents cités:
US - A - 3 696 935
US - A - 4 388 991

(73) Titulaire: GEFITEC S.A., Avenue de la Gare, 5 Case
postale 452, CH-1001 Lausanne 1 (CH)

(72) Inventeur: Posso, Patrick Pierre, Ph., 5, Avenue de la
Gare, CH-1001 Lausanne (CH)

(74) Mandataire: Meylan, Robert Maurice et al, c/o BUGNION
S.A. 10, route de Florissant Case Postale 375,
CH-1211 Genève 12 - Champel (CH)

## Description

La présente invention concerne une bague de cerclage et de stockage pour bobine de ruban d'enregistrement audio, vidéo, données, etc. destinée à être utilisée avec une bobine comprenant un moyeu et une paire de flasques parallèles circulaires, bague comprenant une bande en matière flexible extensible munie sur l'une de ses faces de nervures longitudinales destinées à s'engager de part et d'autre des flasques de la bobine et munie, à l'autre de ses extrémités, d'une boucle associée à des moyens de tension et, à l'autre extrémité, d'une pièce de forme présentant d'une part un point d'accrochage pour ladite boucle et d'autre part un crochet de suspension, cette pièce de forme étant fixée à la bande par deux parties saillantes traversant la bande et retenue sur celle-ci par des élargissements, l'une de ces parties saillantes étant constituée par un téton fendu.

Une bague de ce type est décrite dans le brevet US. 3 696 935. Dans cette bague, l'une des parties saillantes de la pièce de forme est retenue par une partie coudée s'étendant parallèlement à la bande, l'autre partie saillante étant constituée par un téton fendu circulaire. L'effort de retenue sur la partie coudée crée un moment de torsion de telle sorte que le creux du coude constitue un point critique. Quant au téton fendu il est retenu par deux étroites facettes en forme de croissant. La surface de retenue est très faible compte tenu de l'élasticité des matériaux utilisés, en l'occurrence du polyéthylène pour la bande et une autre matière synthétique pour la pièce de forme, telle que du polypropylène ou du terpolymère acrylonitrile-butadiène-styrène connu sous le nom de ABS.

La présente invention a pour but d'améliorer la retenue de la pièce de forme sur la bande.

A cet effet le téton fendu et le trou correspondant de la bande sont de section carrée, l'élargissement du téton présentant deux portées de section rectangulaire, et d'autre partie saillante de la pièce de forme et le trou correspondante constitue une fixation à baionnette.

La fixation à baionnette assure à elle seule une fixation verrouillée. L'effort est réparti sur deux bras et les moments de force sont réduits. L'utilisation d'un téton de section carrée coopérant avec un trou carré permet d'avoir deux portées de retenue rectangulaire de surface sensiblement supérieure à celle des croissants d'un téton de forme circulaire.

Selon une forme d'exécution particulière de l'invention, les parois de la fente du téton fendu en regard l'une de l'autre présentent une dépression près de leurs extrémités et l'extrémité de l'une des parties du téton fendu est reliée à un plot par un bras radial, le diamètre de ce plot étant supérieur à la largeur de la fente du téton, de telle sorte que le plot peut être introduit à force dans ladite fente, dans les dépressions, par pliage dudit bras radial. Ceci permet de neutraliser l'élasticité du téton fendu et d'augmenter encore la sécurité de la fixation de la pièce de forme.

Le dessin annexé représente, à titre d'exemple, une forme d'exécution de l'invention.

La figure 1 est une vue de profil de la pièce de forme montée sur une bande représentée en coupe axiale.

La figure 2 est une vue de détail du téton fendu.

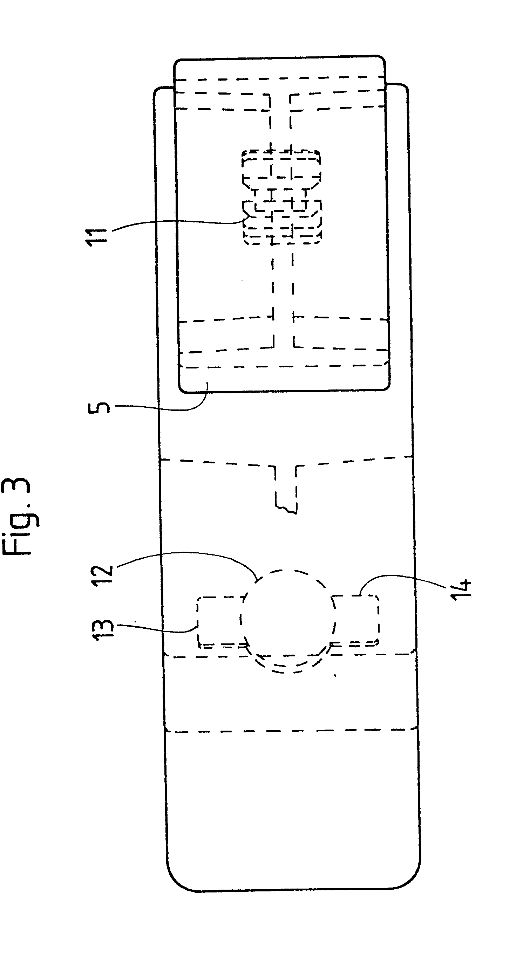

La figure 3 est une vue de dessus de la pièce de forme.

La figure 4 est une section selon III-III de la pièce de forme selon figure 1.

La figure 5 est une vue en coupe selon IV-IV de la figure 1.

La figure 6 est une vue en plan de l'extrémité de la bande à laquelle est fixée la pièce de forme, avant la fixation de celle-ci.

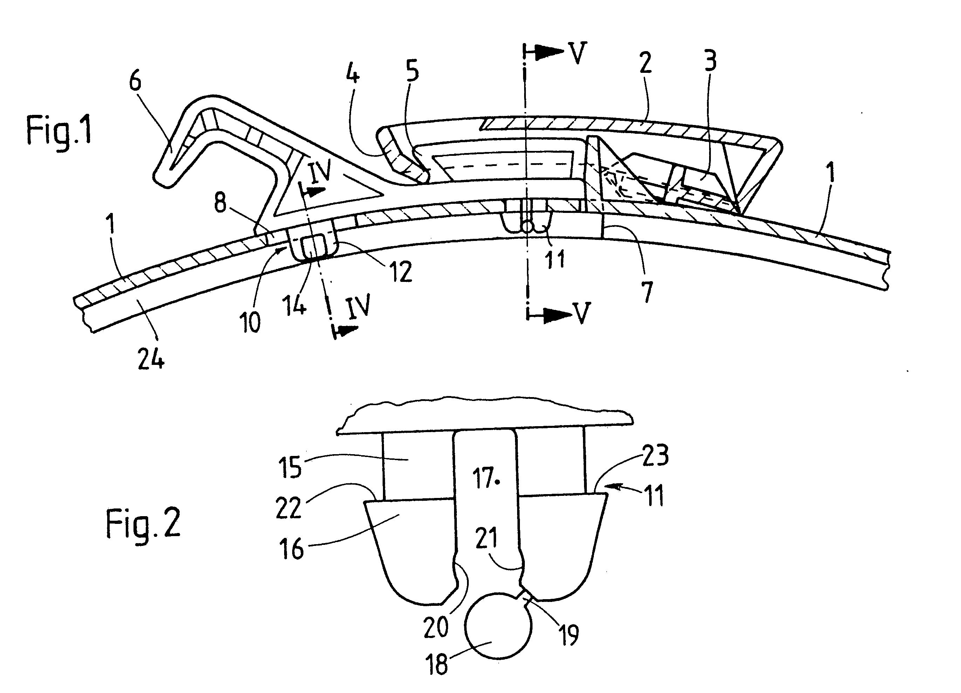

La bague de cerclage et de stockage partiellement représentée à la figure 1 est constituée d'une bande 1 munie de nervures longitudinales (24). Une extrémité de la bande est venue d'une pièce avec une boucle 2 articulée à l'extrémité de la bande 1 au moyen d'une biellette 3. La boucle 2, en forme de capot, présente un bord frontal 4 venant s'accrocher sur le bec 5 d'une pièce de forme fixée à l'autre extrémité de la bande 1 et présentant un crochet 6 destiné à la suspension de la bague sur un support de rangement. Dans la position représentée à la figure 1 la bague est fermée, les deux extrémités de la bande 1 se rejoignant en 7.

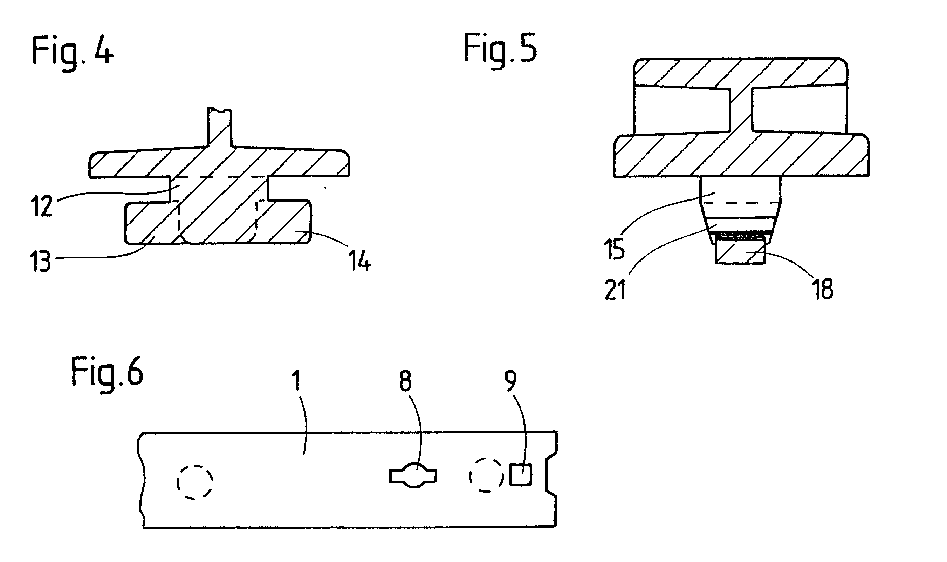

L'extrémité de la bande 1 portant la pièce de forme présente un trou 8 constitué par l'intersection d'une fente rectangulaire longitudinale et d'un trou circulaire et un trou carré 9 (figure 6). La pièce de forme est fixée dans ces trous 8 et 9 par deux parties saillantes 10 et 11.

La partie saillante 10 est constituée d'un pied central cylindrique 12 de diamètre très légèrement inférieur au diamètre de la partie cylindrique du trou 8, ce pied 12 présentant deux bras radiaux 13 et 14 (figure 4) de section essentiellement rectangulaire et dont la longueur totale est légèrement inférieure à la longueur de la fente 8. La saillie 10 et le trou 8 constituent ensemble une fixation à baionnette.

Le téton fendu 11 est de section carrée. Comme représenté aux figures 2 et 5, il présente une première partie 15 de section légèrement inférieure à celle du trou carré 9 de la bande 1 et une seconde partie 16 de section maximale sensiblement supérieure à celle du trou carré 9, mais allant en se rétrécissant vers l'extrémité du téton dont la fente 17 s'étend jusqu'à la base du téton. L'extrémité de l'une des parties du téton fendu 11 est reliée à un plot cylindrique 18, de diamètre supérieur à la largeur de la fente 17, par un bras radial 19. Le tout est bien entendu venu d'une pièce de moulage. Les parois de la fente 17 présentent en outre deux dépressions 20 et 21 correspondant à une surface cylindrique de diamètre légèrement inférieure au diamètre du plot 18.

Pour fixer la pièce de forme à la bande 1, on introduit la saillie 10 dans le trou 8 de la bande en plaçant la pièce de forme transversalement à la bande puis on fait tourner celle-ci de 90° et l'on enfonce le téton fendu 11 dans le trou 9. La pièce de forme est ainsi retenue d'une part par les bras 13 et 14 de sa saillie 10 et d'autre part, par les deux portées rectangulaires 22 et 23 du téton fendu 11. On enfonce ensuite le plot cylindrique 18 dans la fente 17, ce plot 18 venant se loger dans les dépressions cylindriques 20 et 21. La fente d'élasticité du téton fendu est ainsi supprimée et la fixation de la pièce de forme par ce téton fendu est parfaitement assurée.

**Revendications**

1. Bague de cerclage et de stockage pour bobine de ruban d'enregistrement destinée à être utilisée avec une bobine comprenant un moyeu et une paire de flasques parallèles circulaires, bague comprenant une bande (1) en matière flexible extensible munie sur l'une de ses faces de nervures longitudinales (24) destinées à s'engager de part et d'autre des flasques de la bobine et munie, à l'une de ses extrémités, d'une boucle (2) associée à des moyens de tension et, à l'autre extrémité, d'une pièce de forme présentant d'une part un point d'accrochage (5) pour ladite boucle et d'autre part un crochet de suspension (6), cette pièce de forme étant fixée à la bande (1) par deux parties saillantes (10, 11) traversant la bande et retenue sur celle-ci par des élargissements, l'une de ces parties saillantes étant constituée par un téton fendu (11), caractérisée en ce que l'autre partie saillante (10) de ladite pièce de forme et le trou correspondant (8) constituent une fixation à baionnette et en ce que le téton fendu (11) et le trou correspondant (9) de la bande sont de section carrée et que l'élargissement du téton présente deux portées de section rectangulaire (22, 23).

2. Bague selon la revendication 1, caractérisée en ce que les parois de la fente (17) du téton fendu en regard l'une de l'autre présentent une dépression (20, 21) près de leurs extrémités et que l'extrémité de l'une des parties du téton fendu est reliée à un plot (18) par un bras radial (19), le diamètre de ce plot étant supérieur à la largeur de la fente du téton, de telle sorte que le plot peut être introduit à force dans ladite fente, dans les dépressions, par pliage dudit bras radial.

**Patentansprüche**

1. Verschluss- und Speicherung für Aufzeichnungsbandspule zur Verwendung bei einer Spule mit einer Nabe und einem Paar parallelen, kreisförmigen Flanschen, wobei der Ring aus einem Streifen (1) aus einem biegsamen, dehnbaren Material besteht und auf einer seiner Seiten mit Längsrippen (24) versehen ist, welche sich beiderseits der Spulenflansche anlegen, und der an einem seiner Enden eine mit einer Spanneinrichtung verbundene Schnalle 62) und am anderen Ende ein Formstück trägt, welches einerseits eine Verhakungsstelle (5) für diese Schnalle und andererseits einen Aufhängehaken (6) aufweist und welches an dem Band (1) mittels zweier herausstehender Teile (10, 11) befestigt ist, die durch das Band hindurchgehen, und an diesem von Erweiterungen gehalten wird, wobei einer der herausstehenden Teile aus einem gespaltenen Zapfen (11) besteht, dadurch gekennzeichnet, dass der andere herausstehende Teil dieses Formstückes und das zugeordnete Loch (8) eine Bajonettbefestigung bilden und dass der gespaltene Zapfen (11) und das zugeordnete Loch (9) des Bandes einen quadratischen Querschnitt haben und dass die Erweiterung des Zapfens zwei Ausladungen mit rechtwinkligem Schnitt (22, 23) aufweist.

2. Ring nach Anspruch 1, dadurch gekennzeichnet, dass die Wände des Schlitzes (17) von dem gespaltenen Zapfen einander gegenüberliegend eine Vertiefung (20, 21) nahe ihrer Enden aufweisen und dass das Ende eines der Teile des gespaltenen Zapfens mit einem Knebel (18) über einen radialen Arm (19) verbunden ist, wobei der Durchmesser dieses Knebels grösser ist als die Breite des Zapfenschlitzes, so dass der Knebel mit Kraft in diesen Schlitz und dessen Vertiefungen durch Verbiegung dieses radialen Armes eingedrückt werden kann.

**Claims**

1. A ring for sealing and storage of a spool of recording tape and intended for being employed with a spool comprising a hub and a pair of parallel circular cheeks, the ring comprising a band (1) of flexible and extensible matter equipped on one face of it with longitudinal ribs (24) intended for engaging on opposite sides of the cheeks of the spool, and equipped at one end of it with a loop (2) associated with tension means and at the other end with a shaped piece exhibiting firstly a point (5) for hooking-on the said loop and secondly a hook (6) for hanging up, the said shaped piece being fastened to the band by two projecting portions (10, 11) which pass through the band and are held into it by enlargements, one of the said projecting portions consisting of a split stud (11) characterized in that the other projecting portion (10) of the said shaped piece and the corresponding hole (9) in the band are of square section and the enlargement of the stud exhibits two bearing surfaces of rectangular section (22, 23).

2. A ring as in claim 1, characterized in that the walls facing one another in the slit (17) in the split stud each exhibits a depression (20, 21) near the end of it and that the end of one of the portions of the split stud is connected to a plug (18) by a radial arm (19), the diameter of the said plug being greater that the width of the slit in the stud so that the plug may be introduced by force into the said slit and into the depressions, by folding the said radial arm.

Fig.1

Fig.2

Fig. 3

Fig. 4

12
13
14

Fig. 5

15
21
18

Fig. 6

1   8   9

0 164 791